# EUROPÄISCHE PATENTSCHRIFT

(11) **EP 0 649 777 B1**
(45) Veröffentlichungstag und Bekanntmachung des Hinweises auf die Patenterteilung: **18.03.1998**
(21) Anmeldenummer: 94115516.0
(22) Anmeldetag: 01.10.1994
(51) Int. Cl.: B60R 21/00, G07C 5/08

(54) **Auslösevorrichtung für Kfz-Sicherheitssysteme**
Triggening device for a vehicle safety system
Dispositif de déclenchement pour systèmes de sécurité d'automobiles

(30) Priorität: 21.10.1993 DE 4335991
(43) Veröffentlichungstag der Anmeldung: 26.04.1995
(73) Patentinhaber: TEMIC TELEFUNKEN microelectronic GmbH, 74072 Heilbronn (DE)
(72) Erfinder: Spies, Hans, D-85276 Pfaffenhofen (DE); Daxer, Horst, D-81737 München (DE)
(74) Vertreter: Maute, Hans-Jürgen, Dipl.-Ing.

(56) Entgegenhaltungen:
- DE-A- 3 248 192
- DE-A- 3 737 554
- DE-A- 4 113 591
- DE-A- 4 212 337
- DE-C- 4 136 968
- RESEARCH DISCLOSURE, Bd.339, Nr.31, 1. Juli 1992 Seiten 540 - 541, XP316647 'vehicle distress system'
- PATENT ABSTRACTS OF JAPAN vol. 13, no. 432 (M-874) (3780) 27. September 1989 & JP-A-01 164 649 (MITSUBISHI ELECTRIC CORP.) 28. Juni 1989

## Beschreibung

**Die Erfindung betrifft** eine Auslösevorrichtung gemäß dem Oberbegriff des Patentanspruchs 1.

Der **Stand der Technik** besteht einerseits zu Auslösegeräten mit Beschleunigungsaufnehmern gemäß den Patenten DE 37 17 427 C1, DE 38 16 587 C1, DE 41 16 336 C1, DE 41 17 811 C1 und DE 41 35 369 A1 sowie einem Auszug aus dem beiliegenden Prospekt "Airbag Auslösegerät Typ ZAE" mit Blockschaltbild und andererseits zu Unfalldatenschreibern nach "Wirtschaftswoche", Nr. 46 vom 06.11.92, Seite 90 und 92.
Unfalldatenschreiber und Auslösegeräte für Kfz-Sicherheitssysteme können in Kraftfahrzeugen verwendet werden. Jedoch sind beide Systeme vollständig voneinander getrennt und arbeiten unabhängig voneinander. Sowohl Unfalldatenschreiber als auch Auslösegerät beinhalten im wesentlichen je einen oder mehrere Beschleunigungssensoren und Mikroprozessoren.

Die DE-A-3737554 offenbart eine Auslösevorrichtung für Kfz-Sicherheitssysteme zur Nutzung von dynamischen Fahrzeugdaten auf der Basis eines Airbagauslösegerätes mit Sensoren für die Aufnahme von Beschleunigungssignalen. Um ein weiteres zuverlässiges Auswertekriterium für die Auslösung zu erhalten, welches nicht allein auf Beschleunigungswerten beruht, werden auch Bremsmanöver für eine eventuelle Auslösung berücksichtigt.

Die **Nachteile** bisheriger Lösungen bezüglich Airbag-Sensoren sind:
- üblicherweise werden keine oder nur ein kleiner Teil der Fahrzeugbetriebszustände erfaßt,
- erfolgt keine Verletzungszuordnung bei Folgeunfällen (Massenkarambolagen),
- erfolgt keine Betrachtung der Unfallvorgeschichte
   bezüglich Unfalldatenschreiber:
- komplex und teuer,
- Extragerät
- dieses ist nicht Kfz-Bus vernetzbar
- und keine Standardausrüstung.

**Die Aufgabe der Erfindung** ist es, die Vorteile beider o.a. Geräte zu vereinen, dabei aber deren Nachteile zu vermeiden.

**Die Lösung der Erfindung** ist im Patentanspruch 1 enthalten. Hierbei beinhaltet die erfindungsgemäße Auslösevorrichtung Beschleunigungssensoren und einen Mikroprozessoren, die sowohl die Daten für das Airbag-Auslösegerät als auch für den Unfallschreiber messen, auswerten und abspeichern. Beide Systeme greifen auch gleichzeitig auf ein und denselben Sensoren bzw. Mikroprozessor zu.

**Die Vorteile der Erfindung** sind:
- Benutzung eines eingeführten Airbag-Sensors als Basis (Typ ZAE), mit bevorzugt zwei Kanälen für die Aufnahme von Beschleunigungs/Verzögerungssignalen,
- Anbindung an das Fahrzeug bzw. zur Einspeisung von
   - Eigengeschwindigkeit,
   - Betätigung, Gang, Bremse, Blinken,
   - ABS Abregelungs-Signalen
   - bezüglich Brems- und Blockierdruck
- Aufzeichnung dieser Daten für eine bestimmte Zeit vor und nach einem Zünd- oder Triggerereignis.
   Findet kein Ereignis statt, wird der Ringspeicherinhalt überschrieben.

Dies ergibt bessere Auslösecharakteristik, Unfallkonstruktion, Zuordnung von juristisch relevanten Verletzungen, Erhöhung der Zuverlässigkeit.

Ein weiterer Vorteil der Erfindung ist:
Alle Daten aus der Beschleunigungsaufnehmer-Einheit **101** und aus dem Fahrzeugbussystem **109** werden im Umlaufspeicher des Mikroprozessors **103** eine Zeit von z.B. 3 bis 30 Sekunden vor und nach einem Triggerereignis gespeichert.

Damit können bei einem Unfall mit diesem Gerät mit Hilfe der Diagnose-Schnittstelle **110** die relevanten Daten zum Rekonstruieren des Unfalls, dessen Hergang und auch die Verletzungsdynamik der Insassen hergeleitet werden. Dies kann durch Eingabe dieser Daten in ein Rechensystem geschehen, das alle Eichdaten des Gerätes gespeichert hat. Die Daten können aber auch für die Fahrzeughersteller, Gerätehersteller, Versicherer und Rechtsvertreter für die Auswertung der Unfallstatistik, Verursacherbestimmung und Ablaufdynamik verwendet werden.

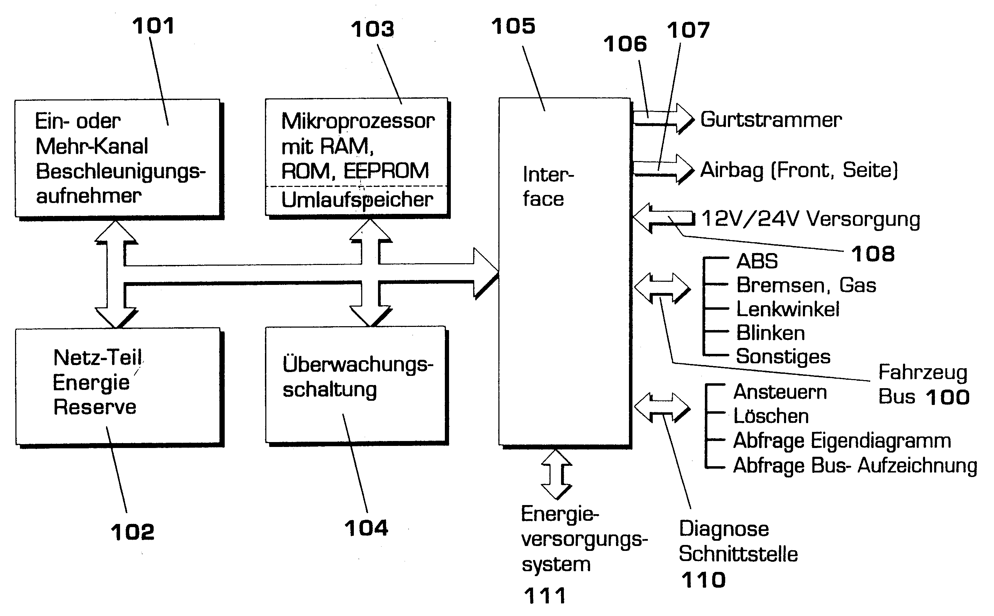

Beschreibung eines **Ausführungsbeispiels**:
Die Erfindung soll anhand der einzigen Figur beschrieben werden.

Das System besteht aus einem ein- oder mehrkanaligen Beschleunigungsaufnehmer **101**, dessen Signale einem Auslöse- und Speicherprozessor **103**, wie bei bisherigen Airbag-Auslösegerät, zugeführt werden. Im Anwendungsbeispiel jedoch hat der Prozessor eine zusätzliche Memory-Funktion, welche im Falle eines Unfalls die gelesenen Daten auch abspeichern kann. Außerdem können mit diesem Prozessor auch die für einen Unfallschreiber relevanten Daten eingelesen und abgespeichert werden. Über das Interface **105** werden dem Prozessor **103** die aktuellen Daten wie Geschwindigkeit des Fahrzeugs, Bremsbetätigung, Bremsabregelung und Zustand, Gasbetätigung, Lenkwinkel und dessen Zeitableitung sowie Betätigungssignale für Blinker usw. über den Fahrzeugbus **100** zugeführt. Das System wird über die Bordenergieversorgung **111**, dem Netzteil und der Energiereserve **102** elektrisch versorgt. Eine Überwachungsschaltung **104** sorgt für die Eigendiagnose und Systemüberwachung.

Der Mikroprozessor **103** kann sowohl den Gurtstrammer **106** und den Airbag **107** bei Bedarf auslösen, als auch die aktuellen Daten vom Fahrzeug Bus **100** bzw. der Diagnose Schnittstelle einlesen und abspeichern. Diese Informationen werden für verschiedenen Auslösealgorithmen benötigt.

Mit Hilfe der Zustandsdaten (aktuelle Daten) wird im Auslöseprozessor **103** der Auslösealgorithmus zur Triggerung der Gurtstrammer und Airbag-Einheiten je nach Vorgeschichte und Eigengeschwindigkeit in der Einstellung der Auslöseparameter so beeinflußt, daß
- bei hohen Eigengeschwindigkeiten eine schnelle Auflösung erfolgt,
- bei starken Bremsverzögerungen die aktuelle Fahrzeug-Eigengeschwindigkeitsänderung mit berücksichtigt wird,
- bei Lenkmanövern die Richtung des zu erwartenden Aufpralls, Front-, Winkel-, Seitenaufprall vorausbestimmt wird,
- bei Abweichungen des Fahrzeugs von der Straße, die noch ungefährlich sind, die Verzögerungen durch das Gelände eine Auslösung nicht unmittelbar eingeleiten.

Damit wird ein weitaus günstigeres Auslöseverhalten für die vorgesehenen Schutzmaßnahmen (**106** und **107**) erreicht oder es werden andere als die bisher bekannten Maßnahmen ermöglicht.

## Patentansprüche

1. Auslösevorrichtung für Kfz-Sicherheitssysteme zur Nutzung und Speicherung von dynamischen Fahrzeugdaten auf der Basis
- eines Airbag-Auslösegerätes, bestehend aus unterschiedlich ausgerichteten (±) Beschleunigungssensoren (101) für die Aufnahme von Beschleunigungssignalen und einem Mikroprozessor (103), und
- einer Einrichtung zur Aufnahme eines Bremsvorganges, insbesondere eines Anti Blockiersystems für die Aufnahme von Bremsdaten
**dadurch gekennzeichnet, daß**
- diese Auslösevorrichtung einen Fahrzeugbus (100) beinhaltet, der zusätzlich gemessene Bewegungs- und Zustandsdaten, wie z.B Lenkwinkel, Blinker, Gas sammelt und verteilt
- der zugrundegelegte Verarbeitungs-Algorithmus in seinen Parametern in Abhängigkeit dieser zusätzlichen Daten beeinflußt wird.
- der Mikroprozessor (103) mit einer Speichereinheit ausgestattet oder dieser zugeordnet ist, in die die gemessenene Daten geschrieben werden,
- diese Auslösevorrichtung eine Diagnoseschnittstelle (110) besitzt, über die nach einem Unfall die gespeicherten Daten ausgelesen werden können.

2. Einrichtung nach Anspruch 1, **dadurch gekennzeichnet, daß** die aus den Aufzeichnungen ermittelte Unfallschwere durch den Mikroprozessor (103) ausgewertet wird und diese Schwere einem Emergency-System zugeführt wird, das Notruf, Standortmeldung und Benachrichtigungen auslöst.

3. Einrichtung nach Anspruch 1, **dadurch gekennzeichnet, daß** zusätzliche Daten eingegeben werden:
- die Betätigung von Gas- und Bremspedal (taktil),
- die Betätigung von Blinkern oder anderen Fahrtrichtungsanzeigern,
- die erfaßten, insbesondere Druckänderungssignale eines fahrzeugeigenen Antiblockiersystems
- die Lenkwinkeländerung vom Lenkrad, hervorgerufen vom Fahrer des Fahrzeugs
sowie eventuell hiervon abhängige oder diese beeinflussenden Daten und daß sämtliche Daten in einem Umlauf-Ringspeicher für 3 bis 30 sec. gespeichert und im Falle eines Unfalls/Crash unlöschbar und nur mittels Code abfragbar sind.

## Claims

1. A tripping device for motor vehicle safety systems for the use and storage of dynamic vehicle data based on
- an airbag tripping device comprising differently aligned (±) acceleration sensors (101) for the recording of acceleration signals and a microprocessor (103) and
- a device for the recording of a braking process, in particular an anti-skid system for the recording of braking data
characterised in that
- this tripping device comprises a vehicle bus (100) which collects and distributes additionally measured movement- and status data, such as for example steering angle, flashing indicators, acccelerator pedal
- the basic processing algorithm is influenced in respect of its parameters as a function of this additional data
- the microprocessor (103) is equipped with or assigned to a storage unit into which the measured data are input
- this tripping device has a diagnostic interface (110) via which the stored data can be read-out following an accident.

2. A device according to Claim 1, characterised in that the gravity of the accident determined from the recordings is analyzed by the microprocessor (103) and this accident gravity is fed to an emergency system which triggers distress call, location report and information.

3. A device according to Claim 1, characterised in that additional data are input:
- the actuation of accelerator- and brake pedal (tactile)
- the actuation of flashing indicators or other vehicle-direction indicators
- the detected, in particular pressure-change, signals of a vehicle anti-skid system
- the change in steering angle of the steering wheel, implemented by the driver of the vehicle and any data which are dependent upon or influence the above
and that all the data are stored in a circulating ring store for 3 to 30 seconds and in the event of an accident/crash are unerasable and can be called up only by means of a code.

## Revendications

1. Dispositif de déclenchement pour systèmes de sécurité de véhicules automobiles en vue de l'utilisation et de la mémorisation de données dynamiques du véhicule en fonction
- d'un appareil de déclenchement d'airbag, se composant de capteurs d'accélération différemment alignés (±) (101) pour la réception de signaux d'accélération et d'un microprocesseur (103) et
- d'un dispositif en vue de l'enregistrement d'un processus de freinage, en particulier d'un système anti-blocage pour la réception de données de freinage,
caractérisé en ce que
- ce dispositif de déclenchement comporte un bus de véhicule (101), qui rassemble et répartit en outre des données de mouvement et d'état mesurées, comme par exemple, l'angle de direction, le clignotement, les gaz,
- l'algorithme de traitement de base a ses paramètres influencés en fonction de ces données supplémentaires
- le microprocesseur (103) est équipé d'une unité de mémoire ou associé à celle-ci, dans laquelle sont écrites les données mesurées,
- ce dispositif de déclenchement possède un point de diagnostic (110) par l'intermédiaire duquel, après un accident, les données mémorisées peuvent être lues.

2. Dispositif selon la revendication 1, caractérisé en ce que les données de l'accident détectées par les enregistrements sont évaluées par le microprocesseur (103) et ces données sont appliquées à un système d'urgence, qui déclenche un appel d'urgence, un message de localisation, et des informations.

3. Dispositif selon la revendication 1, caractérisé en ce que des données supplémentaires sont délivrées :
- la manoeuvre de la pédale de gaz et de frein (tactile),
- la manoeuvre de clignotants, ou d'autres indicateurs de direction du véhicule,
- les signaux détectés, en particulier de variation de pression d'un système anti-blocage du véhicule
- la variation d'angle de direction du volant, provoquée par le chauffeur du véhicule
ainsi éventuellement que des données fonctions de celles-ci ou influençant celles-ci et en ce que la totalité des données sont mémorisées dans une mémoire en anneau de circulation pendant 3 à 30 secondes et dans le cas d'un accident/collision sont ineffaçables et interrogeables uniquement au moyen d'un code.
